# EUROPEAN PATENT APPLICATION

(11) **EP 1 350 546 A1**
(43) Date of publication of application: **08.10.2003**
(21) Application number: 02006912.6
(22) Date of filing: 26.03.2002
(51) Int. Cl.: A63F 13/12, H04L 12/56

(54) **Mobile terminal and digital gaming device adapted for a telephone communication in a Bluetooth system**

(71) Applicant: Sony International (Europe) GmbH, 10785 Berlin (DE)
(72) Inventor: Mäenpää, Jari, 85609 Aschheim-Dornach (DE)
(74) Representative: Körber, Martin, Dipl.-Phys.

(57) **Abstract**

The present invention relates to a mobile terminal (1) for a wireless telecommunication system, which comprises transmitting and receiving means (8; 9) for transmitting and receiving signals in a wireless telecommunication system according to the Bluetooth standard. Hereby, a telephone communication with a Bluetooth device is enabled. The Bluetooth device is e.g. a digital gaming device (20) according to the present invention, which allows to play digital games loadable into the device. Hereby, the digital gaming device (20) also comprises transmitting and receiving means (28; 29) enabling a telephone combination with the mobile terminal (1) so that a telephone application in a game played on the gaming device (20) can be simulated.

## Description

The present invention relates to a mobile terminal for a wireless telecommunication system, such as the GSM and the UMTS system. The present invention further relates to a digital gaming device for playing digital games loadable into the device.

Mobile terminals for wireless telecommunication systems are in wide-spread use and are often not only adapted to communicate in one wireless telecommunication system, but also in two or three wireless telecommunication systems. Also, mobile terminals with extended functionalities are on the market, such as personal digital assistants adapted for communication in wireless telecommunication systems as well as for managing private and business data, schedules and so on of a user. Further, mobile terminals have been proposed which incorporate the Bluetooth technology for flexibly forming small wireless networks with other devices and to exchange data and information.

On the other hand, digital gaming devices for playing digital games loadable into the device are well-known and established in the art. E.g., Sony Corporation manufactures and sells such devices under the trademark PlayStation™. This kind of gaming devices usually comprises a reading means for reading a game stored on a digital storing medium loaded into the gaming device. Examples are CD-ROMs and DVDs, onto which games are stored. A digital gaming device reads the digital game loaded into the reading means and displays it on a display means either being part of the gaming device or being connectable to the gaming device. The control of the game and the input of instructions is done by a corresponding input means, such as a joystick through which a user can play his or her active role in the game by inputting the respectively necessary instructions. Although the variety and particularly the display resolution of digital (video) games is steadily growing, there is a need to render the games more realistic and interesting for the user.

The object of the present invention is therefore to provide possibilities to make digital games more realistic and interesting for a user.

This object is achieved by a mobile terminal for a wireless telecommunication system according to claim 1, the mobile terminal according to the present invention comprises first transmitting and receiving means for transmitting and receiving signals in a wireless telecommunication system, controlling means for controlling the operation of the mobile terminal and the transmission and reception of signals in a wireless telecommunication system. Further, the mobile terminal according to the present invention comprises second transmitting and receiving means for transmitting and receiving signals in a wireless communication system according to the Bluetooth standard, whereby the controlling means controls the transmission and reception of signals via the second transmitting and receiving means so that a telephone communication with the Bluetooth device is enabled in a wireless telecommunication system according to the Bluetooth standard.

The above object is further achieved by a digital gaming device for playing digital games loadable into the device according to claim 7. The digital gaming device according to the present invention comprises input means for inputting game instructions, control means for controlling the course of a game loaded into the device on the basis of game instructions input via the input means, and transmitting and receiving means for transmitting and receiving signals in a wireless telecommunication system according to the Bluetooth standard, whereby the controlling means controls the transmission and reception signals via the transmitting and receiving means so that a telephone communication with a Bluetooth device is enabled in the wireless telecommunication system according to the Bluetooth standard and a telephone application in a game played on the device can be simulated by such a telephone communication.

The present invention therefore enables the use of mobile terminals for wireless telecommunication system such as the GSM or the UMTS or any other system, in a digital game played on a digital gaming device according to the present invention. If, e.g., a character in a digital game is using a mobile terminal, such as a cell phone, in the game, the player or user who is acting as the character in the game or directing the character can use his or her mobile terminal to communicate with the character in the game through the Bluetooth communication link in the mobile terminal and the gaming device as proposed. Specifically, phone calls, SMS messages and so on can be communicated between the mobile terminal and the gaming device according to the present invention so that the digital game becomes much more realistic, interesting and versatile. Also, the use of a mobile terminal, such as a cell phone, in the game could be simulated by actually using the mobile terminal according to the present invention.

The control means of the mobile terminal according to the present invention comprises an implementation of protocol stack layers for a telephone communication in the wireless telecommunication system. The protocol stack layers correspond to the usual signalling protocol architecture, i.e. layer 1, layer 2 and layer 3, as e.g. laid down for the GSM system. According to the present invention, the control means of the mobile terminal according to the present invention comprises an implementation of at least the lowest protocol stack layer for a telephone communication in a wireless telecommunication system according to the Bluetooth standard. In other words, at least layer 1 of the wireless telecommunication system, e.g. the GSM system, has a corresponding generic implementation of a Bluetooth telephony profile, i.e. a physical layer for the Bluetooth connection. Hereby, the upper protocol stack layers of the wireless telecommunication system control the layer 1 of the wireless telecommunication system as well as the Bluetooth telephony profile for the Bluetooth connection.

Alternatively, the control means of the mobile terminal according to the present invention comprises an implementation of all the protocol stack layers for a telephone communication in the wireless telecommunication system according to the Bluetooth standard. In this case, an entire set of protocol stack layers for the wireless telecommunication system is provided as well as a parallel set of protocol stack layers for the Bluetooth communication. This second alternative provides a more flexible and variable implementation possibility than the first alternative. Particularly, the Bluetooth telephone functionalities can be stream-lined so that only the functionalities necessary for the simulated Bluetooth telephony are implemented.

Advantageously, the protocol stack layer or layers is or are implemented as software in the control means and/or a memory means of the mobile terminal. The wireless telecommunication system according to the Bluetooth standard as used by the mobile terminal and the digital gaming device according to the present invention is a wireless telecommunication system as specified and defined by the Bluetooth special interest group. This Bluetooth standard defined link layers and application layers for a communication of data and voice in the 2.4 GHz frequency range. Specifically, the Bluetooth communication system supports short range radio links to replace cables between devices in a room or in a building, such as computers and their connected units.

Further advantageously, the mobile terminal according to the present invention comprises a man-machine-interface comprising a display means for displaying information and input means for inputting information, whereby said man-machine-interface is controlled by the control means so that the display means and the input means are put into a Bluetooth communication mode during a communication in the wireless telecommunication system according to the Bluetooth standard. This means that, as soon as the mobile terminal is in the Bluetooth communication mode and in a telephone communication with a digital gaming device, the man-machine-interface of the mobile terminal is changed from the normal wireless telephone communication mode, so that a user knows in which communication mode he or she is in. Hereby, confusion for the user can be avoided.

During a communication between the mobile terminal according to the present invention and a Bluetooth device, such as the digital gaming device according to the present invention, the transmitted information comprises information about the operation of the mobile terminal by the user. Hereby, e.g., not only speech data or SMS messages can be transmitted to be implemented into the game currently played by the user on the digital gaming device, but also the operation of the mobile terminal can be made part of the game to make it more realistic and interesting.

Advantageously, the control means of the digital gaming device according to the present invention comprises an implementation of at least the lowest protocol stack layer for a telephone communication in the wireless communication system according to the Bluetooth standard. Similar to the corresponding first alternative of a mobile terminal according to the present invention, the lowest protocol layer, i.e., the physical layer is implemented as a Bluetooth telephony profile. The upper protocol layers can be simulated by a telephony server. Alternatively, the control means of the digital gaming device can comprise an implementation of all the protocol stack layers for a telephone communication in the wireless telecommunication system according to the Bluetooth standard. This case allows a very flexible and free implementation of a Bluetooth telephony solution in the digital gaming device which can be restricted to only the functionality needed for the specific application.

Further advantageously, the protocol stack layer or layers is or are implemented as software in the control means and/or a memory means of the digital gaming device.

The above object is further achieved by a combination of a mobile terminal according to the present invention and a digital gaming device according to the present invention.

The present invention is explained in more detail in the following description in relation to the enclosed drawings, in which
Fig. 1 shows schematically a mobile terminal according to the present invention,
Fig. 2 shows schematically a digital gaming device according to the present invention,
Fig. 3 schematically shows a first possibility of a protocol stack layer implementation according to the present invention, and
Fig. 4 schematically shows a second possibility for a protocol stack layer implementation according to the present invention.

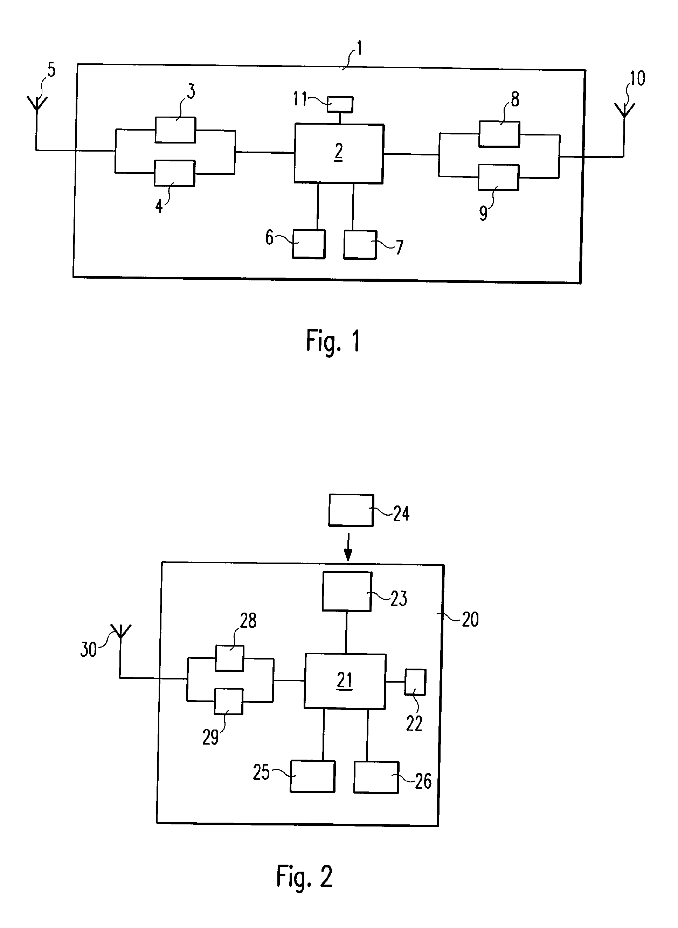

Fig. 1 schematically shows a mobile terminal 1 according to the present invention. The mobile terminal 1 is adapted to transmit and receive information in a wireless telecommunication system, such as the GSM, UMTS or any other system for the wireless communication of information and data. The mobile terminal 1 according to the present invention can e.g. be a mobile telephone, such as a cell phone, a personal digital assistant or the like.

The mobile terminal 1 according to the present invention comprises a controlling means 2 such as a microprocessor or a baseband processor for controlling the operation of the mobile terminal 1. Part of the functionalities of the mobile terminal 1 are implemented by software, which can be stored in a memory means 11 connected to the controlling means or even part of the controlling means 2. For the transmission and the reception of speech data, user data or other data in the wireless telecommunication system, the mobile terminal 1 comprises a transmitting means 3 and a receiving means 4 connected to a transmitting and receiving antenna 5. Further, the mobile terminal 1 comprises a man-machine-interface with a display means 6, such as a liquid crystal display and input means 7 for inputting information such as a keypad, for inputting information and instructions to the mobile terminal 1. All functionalities are controlled by the controlling means 2. Further elements usually comprised in a mobile terminal 1 for enabling a communication in the wireless telecommunication system are not shown for the sake of clarity.

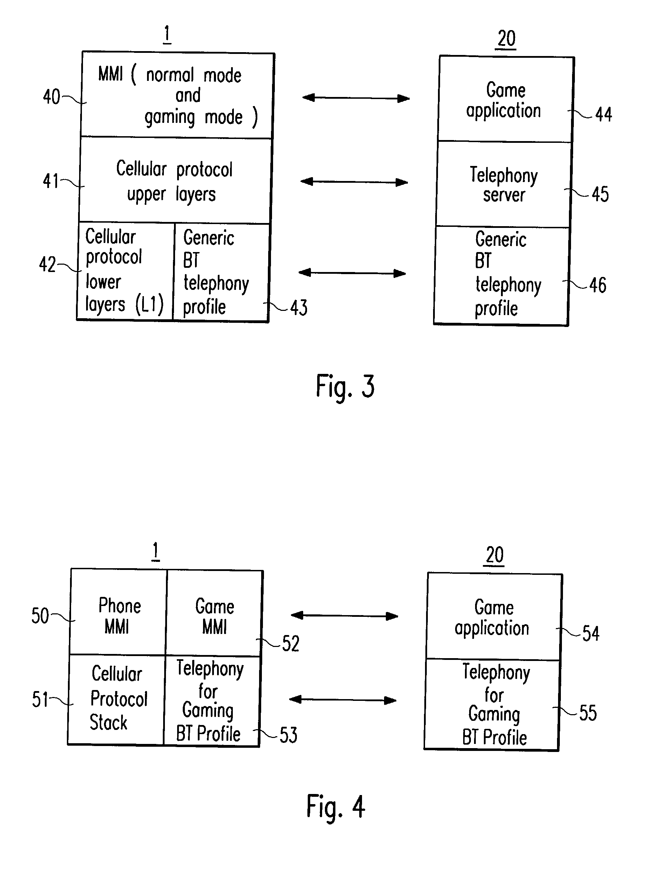

The mobile terminal 1 further comprises elements enabling a telephone communication in a wireless communication system according to the Bluetooth standard, such as a transmitting means 8, a receiving means 9 and a transmitting and receiving antenna 10. These elements and additional elements which are not shown enable the operation of the mobile terminal 1 as a telephone device in co-operation with a digital gaming device 20 as shown in and explained in relation to Fig. 2. The specific implementation of the Bluetooth telephone functionalities in the mobile terminal 1 will be explained below in relation to Figs. 3 and 4.

Fig. 2 schematically shows a digital gaming device 20 according to the present invention. The digital gaming device 20 is adapted for playing digital games loadable into the device and can e.g. be a PlayStation™ manufactured and sold by Sony Corporation or any other similar device which allows to play digital (video) games. Hereby, the digital gaming device 20 comprises a control means 21 for controlling the operation of the digital gaming device 20 and particularly the course of a game 24 loaded into a corresponding reading means 23 connected to the controlling means 21. Further, the control means controls the course of a game 24 on the basis of instructions input via an input means 25, such as a joystick or the like. The digital gaming device 20 may further comprise a display means 26, such as a video or TV screen. Alternatively, the digital gaming device 20 may not comprise a display means but a connection interface for connecting the gaming device 20 to a TV set or the like.

The control means 21 further comprises or is connected to a memory means 22 comprising the necessary software implementations for running the gaming device 20.

Further and according to the present invention, the digital gaming device 20 comprises a transmitting means 28 and a receiving means 29 connected to a transmitting and receiving antenna 30 for transmitting and receiving speech data, user data and so on in a wireless telecommunication system according to the Bluetooth standard. The transmission and reception of data over the Bluetooth link is also controlled by the controlling means 21.

The mobile terminal 1 according to the present invention and the digital gaming device 20 according to the present invention are specifically adapted to communicate with each other over the wireless telecommunication system according to the Bluetooth standard. If, e.g., a character in a digital game 24 played on the digital gaming device 20 is using a mobile terminal for a wireless telecommunication system, such as a cell phone, during the game, the telephone functionalities of the mobile terminal can be realised by the mobile terminal 1 on the basis of the Bluetooth communication with the digital gaming device 20. E.g., telephone calls, SMS messages or the like transmitted from or received by the mobile terminal in the game are received or transmitted by the mobile terminal 1 over the Bluetooth link. Hereby, the digital game can be more realistic and more interesting for the user. A user playing the game can use his or her own mobile terminal 1 to interactively participate in the game.

Hereby, the mobile terminal 1 comprises a special game playing mode in which the operation of the mobile terminal, i.e. input of instructions/data, display of information, transmission and reception of voice data, SMS messages and so on, is identical or very similar to the usual operation in the wireless telecommunication system. However, the communication takes place over the transmitting means 8, the receiving means 9 and the transmitting/receiving antenna 10 via the Bluetooth link with the transmitting means 28, receiving means 29 and transmitting/receiving antenna 30 of the digital gaming device 20. For the user of the mobile terminal 1, however, the special game playing mode should be visible, either by a display which is completely different from the normal display during the operation in the wireless telecommunication system, or a different colour or any other suitable distinction. The mobile terminal 1 can hereby be easily switched between the gaming mode and the normal operation mode by pressing a single key. Specifically, if during the game playing mode a telephone call in the normal wireless telecommunication system is received, the call can be picked up by simply pressing a single key.

The implementation of the communication protocols for the wireless telecommunication system according to the Bluetooth standard in the mobile terminal 1 and the digital gaming device 20 can be realised in two ways. A first possibility is schematically shown in Fig. 3 and the second possibility is schematically shown in Fig. 4. The mobile terminal 1 comprises all necessary protocol stack layers for the operation in the wireless telecommunication system. If, e.g., the mobile terminal 1 is a cell phone for the GSM system, it comprises the necessary cellular protocol stack, which comprises (for the signalling protocol architecture) three layers. The first or lowest layer is the physical layer which comprises the realisation of the logical signalling channels. The second layer or LAPDm-layer (Link Access Procedure on the Dm channels) is a security protocol which is responsible for the secure transfer of signalling data. The third layer essentially comprises three sub-layer, the radio resource management, the mobility management and the connection management, whereby the connection management is further sub-divided into the protocol instances call control, supplementary services and short message services. In Fig. 3 on the left side, the protocol layers of the mobile terminal 1 are schematically shown, whereby the cellular protocol upper layers 41 comprise the second and the third layer as described above and the cellular protocol lower layer 42 corresponds to the first or lowest layer (physical layer). In Fig. 4, the protocol layers of the mobile terminal 1 are also shown on the left side, whereby all three protocol layers are shown as the cellular protocol stack 51. Above the cellular protocol layers, the man-machine-interface is superposed. The man-machine-interface comprises essentially the display means 25 as e.g. a liquid crystal display, and the input means 26 as e.g. a keypad. In the implementation shown in Fig. 3, one common man-machine-interface application 40 for the normal communication mode in the wireless telecommunication system as well as for the gaming mode for the communication over the Bluetooth link is provided. On the lowest protocol level, the generic Bluetooth telephony profile 43 is implemented parallel to the lowest cellular protocol layer. The generic Bluetooth telephony profile 43 handles signalling, voice, data and SMS message transmission over the Bluetooth link. Although the Bluetooth special interest group has specified a cordless telephony profile, this profile only considers voice transmission and the necessary elements for a generic Bluetooth telephony for a gaming environment like SMS messaging are missing from that known profile. All these additional elements are implemented in the profile 43 according to the present invention. All the protocol layers 41, 42 and the generic Bluetooth telephony profile 43 are implemented as software in the control means 2 and the memory means 11 of the mobile terminal 1. In the generic scenario shown in Fig. 3, most of the existing protocol stack for the wireless telecommunication system is reused, the man-machine-interface functionality 40 also reuses most of the existing man-machine-interface functionality, so that a user can use the existing cellular telephone applications also in the gaming environment. Naturally, most of the phone items would not work unless the gaming device 20 implements routing functionality to a PSTN note. To cover that disadvantage a specific gaming mode can be used in which only certain phone book items are useable in the game environment. On the side of the digital gaming device 20, the game application functionality 44 corresponds to the level of the man-machine-interface 40 of the mobile terminal 1. Further, a telephony server functionality 45 is implemented below the game application functionality 44, whereby the telephony server functionality 44 corresponds to the cellular protocol upper layers 41 on the side of the mobile terminal 1. Below the telephone server functionality 45, a generic Bluetooth telephony profile 46 as the lowest physical layer is implemented corresponding to the generic Bluetooth telephone profile 43 in the mobile terminal 1. The protocol layers 44, 45, 46 of the gaming device 20 are also implemented as software in the control means 21 and the memory means 22 of the gaming device 20.

Fig. 4 shows a more specific solution for the implementation of the protocol layers, whereby on the side of the mobile terminal 1 a telephony for gaming Bluetooth profile 53 is implemented parallel to the entire cellular protocol stack 51 of the usual wireless telecommunication protocols. In this case, a specific game man-machine-interface 52 is implemented parallel to the usual phone man-machine-interface 50. Hereby, a confusion between the normal cellular telephone MMI and the game MMI can be avoided. In this case, there is a specific game telephony user interface area for telephone communication, SMS messaging, contacts etc. that is dedicated only for the gaming environment. Further, in this embodiment the gaming area could have specific phone book items for the gaming purpose in order to avoid that a user tries to make normal phone calls in the simulated environment. On the side of the gaming device 20, an entire telephony for gaming Bluetooth profile 55 is implemented corresponding to the profile 53 on the mobile terminal side. Both telephony for gaming Bluetooth profiles 53 and 55 are implemented as software in the mobile terminal 1 and the gaming device 20, respectively. The specific solution shown and explained in relation to Fig. 4 allows a specified and more free solution that the generic possibility shown in Fig. 3. In the specific solution, only the functionalities necessary and wanted in the gaming environment can be implemented.

For both implementations, it has to be understood that the essential functionalities of a portable cell phone, as the speech functionality, SMS messaging, input of data/instructions via the keypad, hearing ringing tones etc. are realised and applicable for the telephone communication over the Bluetooth link. For the beginning of a telephone communication over the bluetoot link between the mobile terminal 1 and the gaming device 20, the established Bluetooth procedures inquiry and paging are used. The actual exchange of voice or data messages is done by a simulation of the cellular network protocol signalling.

## Claims

1. Mobile terminal (1) for a wireless telecommunication system, with
first transmitting and receiving means (3; 4) for transmitting and receiving signals in a wireless telecommunication system,
controlling means (2) for controlling the operation of the mobile terminal (1) and the transmission and reception of signals in the wireless telecommunication system,
further comprising
second transmitting and receiving means (3; 4) for transmitting and receiving signals in a wireless communication system according to the Bluetooth standard,
whereby the controlling means (2) controls the transmission and reception of signals via the second transmitting and receiving means (8; 9) so that a telephone communication with a Bluetooth device (20) is enabled in the wireless communication system according to the Bluetooth standard.

2. Mobile terminal (1) for a wireless telecommunication system according to claim 1,
**characterized in,**
**that** the control means (2) comprises an implementation of protocol stack layers for a telephone communication in the wireless telecommunication system and an implementation of at least the lowest protocol stack layer for a telephone communication in the wireless communication system according to the Bluetooth standard.

3. Mobile terminal (1) for a wireless telecommunication system according to claim 2,
**characterized in,**
**that** the control means (2) comprises an implementation of all the protocol stack layers for a telephone communication in the wireless communication system according to the Bluetooth standard

4. Mobile terminal (1) for a wireless telecommunication system according to claim 2 or 3,
**characterized in,**
**that** the protocol stack layer(s) is (are) implemented as software in the control means (2) and/or a memory means (11).

5. Mobile terminal (1) for a wireless telecommunication system according to one of the claims 1 to 4,
**characterized by**
a man-machine-interface comprising a display means (6) for displaying information and input means (7) for inputting information, said man-machine-interface being controlled by said control means (2) so that said display means (6) and said input means (7) are put into a Bluetooth communication mode during a communication in the wireless communication system according to the Bluetooth standard.

6. Mobile terminal (1) for a wireless telecommunication system according to one of the claims 1 to 5,
**characterized in,**
**that** during a communication with a Bluetooth device (20) the transmitted information comprises information about the operation of the mobile terminal by a user.

7. Digital gaming device (20) for playing digital games loadable into the device, comprising input means (25) for inputting game instructions,
control means (21) for controlling the course of a game loaded into the device on the basis of game instructions input via the input means (25),
further comprising
transmitting and receiving means (28; 29) for transmitting and receiving signals in a wireless communication system according to the Bluetooth standard,
whereby the controlling means (21) controls the transmission and reception of signals via the transmitting and receiving means (28; 29) so that a telephone communication with a Bluetooth device (1) is enabled in the wireless communication system according to the Bluetooth standard and a telephone application in a game played on the device (20) can be simulated by such a telephone communication.

8. Digital gaming device (20) for playing digital games according to claim 7,
**characterized in,**
**that** the control means (21) comprises an implementation of at least the lowest protocol stack layer for a telephone communication in the wireless communication system according to the Bluetooth standard.

9. Digital gaming device (20) for playing digital games according to claim 7 or 8,
**characterized in,**
**that** the control means (21) comprises an implementation of all the protocol stack layers for a telephone communication in the wireless communication system according to the Bluetooth standard.

10. Digital gaming device (20) for playing digital games according to claim 8 or 9,
**characterized in,**
**that** the protocol stack layer(s) is (are) implemented as software in the control means and/or a memory means.

11. Combination of a mobile terminal (1) according to on of the claims 1 to 6 and a digital gaming device (20) according to one of the claims 7 to 10.
